**Europäisches Patentamt**

(19) **European Patent Office**

**Office européen des brevets**

(11) Veröffentlichungsnummer: **0 097 286**

**A1**

(12) # EUROPÄISCHE PATENTANMELDUNG

(21) Anmeldenummer: **83105640.3**

(22) Anmeldetag: **09.06.83**

(51) Int. Cl.³: **F 16 K 31/58**
**F 16 K 31/524**

(30) Priorität: **11.06.82 DE 3222004**

(43) Veröffentlichungstag der Anmeldung:
**04.01.84 Patentblatt 84/1**

(84) Benannte Vertragsstaaten:
**AT BE CH FR GB IT LI LU NL SE**

(71) Anmelder: **Dalferth, Gotthilf Robert**
**Auf den Felsen 25**
**D-7140 Ludwigsburg-Poppenweiler(DE)**

(72) Erfinder: **Dalferth, Gotthilf Robert**
**Auf den Felsen 25**
**D-7140 Ludwigsburg-Poppenweiler(DE)**

(74) Vertreter: **Vogel, Georg**
**Hermann-Essig-Strasse 35 Postfach 105**
**D-7141 Schwieberdingen(DE)**

(54) **Vorrichtung zum Auslösen des Wasserauslaufes bei einem Wasserhahn.**

(57) Um mit einfachem und betriebssicherem Aufbau eine Nachrüstung an bereits installierten Wasserhähnen vornehmen zu können, sieht die Erfindung vor, daß die Schalteinrichtung in einem hohlzylinderförmigen Gehäuse (10) mit Einlaß- und Auslaßöffnung untergebracht ist, die im Bereich der Einlaßöffnung mit dem Auslaufkopf des Wasserhahnes verbindbar ist, daß die Schalteinrichtung als Schaltventil mit einem Ventilkörper (20) ausgebildet ist, der der Auslaßöffnung zugekehrt an einem Ventilsitz (23) anliegt, und daß der Ventilkörper (21) mittels einer aus der Auslaßöffnung (12) des Gehäuses ragenden Betätigungsstange (31) von dem Ventilsitz abhebbar ist.

EP 0 097 286 A1

Vorrichtung zum Auslösen des Wasserauslaufes
bei einem Wasserhahn

Die Erfindung betrifft eine Vorrichtung zum Auslösen des Wasserauslaufes
bei einem Wasserhahn mit Schalteinrichtung, die mittels eines aus der
Auslauföffnung ragenden Betätigungsgliedes betätigbar ist, bei der ein
hohlzylinderförmiges Gehäuse mit Einlaß- und Auslaßöffnung mit dem
Auslaufkopf des Wasserhahnes verbindbar ist und die Schalteinrichtung
einen Ventilkörper aufweist, der der Auslaßöffnung zugekehrt an einem
Ventilsitz anliegt und mittels des Betätigungsgliedes von diesem abhebbar ist.

Eine Vorrichtung dieser Art ist durch die DE-PS 714 423 bekannt. Dabei
ist das Betätigungsglied fest mit dem Ventilkörper verbunden und in der
Längsachse des Gehäuses verstellbar an dem Gehäuse geführt. Zur Betätigung des Wasserauslaufes muß das Betätigungsglied angehoben werden.
Dabei wird der Ventilkörper mit angehoben und die Auslaßöffnung freigegeben, die sich über das hohle Betätigungsglied fortsetzt. Das Betätigungsglied hat umfangsseitige Handhaben, damit es außerhalb der Auslaßöffnung gefaßt werden kann.

Diese bekannte Vorrichtung ist lediglich zur Freigabe und Sperrung des
Wasserauslaufes geeignet, jedoch nicht für einen Wasserhahn, bei dem der
Wasserauslauf allein durch das Einbringen der zu waschenden Hände unterhalb die Auslauföffnung gesteuert werden soll. Das dauernde Anheben des Betätigungsgliedes läßt das zum Waschen erforderliche Reiben der Hände nicht zu.

Um den Wasserverbrauch beim Waschen der Hände zu reduzieren, sind Vorrichtungen erforderlich, die beim Einbringen der Hände unterhalb der Auslauföffnung betätigbar sind, das Reiben der Hände jedoch unbeschränkt zulassen.

Dabei gibt es die verschiedensten Schalteinrichtungen, um das Einbringen der Hände in den Bereich unterhalb die Auslauföffnung des Wasserhahnes und das Wiederentfernen der Hände aus diesem Bereich zu überwachen.

Wie die DE-OSn 27 21 154, 30 25 603 und 30 35 935 zeigen, sind schon opto-elektrische Schalteinrichtungen in das Auslaufgehäuse des Wasserhahnes eingebaut worden.

Die DE-OS 27 55 665 zeigt Annäherungsschalter als Schalteinrichtungen und in den DE-OSn 27 21 217, 27 21 225 und 27 21 254 sind Ultraschall-Präsenz-Bewegungsdetektoren als Schalteinrichtungen für derartige Vorrichtungen beschrieben.

Allen diesen bekannten Vorrichtungen ist gemeinsam, daß der Aufwand für die Schalteinrichtung beachtlich ist und daß sie nicht ohne weiteres an bereits installierten Wasserhähnen nachgerüstet werden können.

Es ist Aufgabe der Erfindung, eine Vorrichtung der eingangs erwähnten Art zu schaffen, die einfach im Aufbau ist, betriebssicher arbeitet und an bereits installierten Wasserhähnen leicht nachgerüstet werden kann, wobei insbesondere die Betätigung der Schalteinrichtung das Reiben der Hände während des Waschvorganges unbeschränkt zuläßt.

Diese Aufgabe wird nach der Erfindung dadurch gelöst, daß der Ventilkörper von dem als Betätigungsstange ausgebildeten Betätigungsglied getrennt ist, daß das dem Ventilkörper zugekehrte Ende der Betätigungsstange als Betätigungsplatte ausgebildet ist, die die Betätigungsstange unverlierbar in dem Gehäuse festhält und auf der sich der Ventilkörper abstützt und daß die Betätigungsstange im Bereich der Betätigungsplatte allseitig verschwenkbar im Gehäuse gelagert ist und bei dieser Verschwenkung der Betätigungsstange den Ventilkörper anhebt.

Die Ausbildung des Betätigungsgliedes als allseitig auslenkbare und aus der Auslaßöffnung ragende Betätigungsstange bringt den Vorteil, daß das Betätigungsglied beim Einbringen der Hände unterhalb die Auslaßöffnung nicht gefaßt werden muß und einfach ausgelenkt wird. Die Hände bleiben frei und können unbeschränkt die für den Waschvorgang erforderlichen Reibebewegungen ausführen. Solange sich die Hände unterhalb der Auslauföffnung befinden, bleibt die Betätigungsstange ausgelenkt und der Wasserauslauf ist freigegeben. Werden die Hände aus diesem Bereich entfernt, kann sich die Betätigungsstange in ihre lotrechte Stellung zurückstellen. Der Wasserauslauf wird selbsttätig gesperrt.

Die Führung des Ventilkörpers bei der Verstellbewegung wird nach einer Ausgestaltung dadurch verbessert, daß sich der Ventilkörper mittels eines Stützbolzens auf der Betätigungsplatte der Betätigungsstange abstützt und daß der Stützbolzen im Gehäuse axial verstellbar geführt ist. Dabei ist die Ausgestaltung vorzugsweise so, daß der Ventilkörper dem Ventilsitz zugekehrt kegelstumpfförmig ausgebildet ist und einstückig in den Stützbolzen übergeht, daß der Stützbolzen in ein Gewindeteil ausläuft, auf das ein Kunststofftopf angeschraubt ist, der als Ende auf der Betätigungsplatte der Betätigungsstange abgestützt ist und daß der Kunststofftopf in einer Lagerbuchse axial verstellbar geführt ist.

Der Aufbau der Schalteinrichtung und des Ventils ist nach einer weiteren Ausgestaltung so vorgenommen, daß als Ventilsitz ein Dichtungsring verwendet ist, der in eine abgesetzte Bohrung eines Einsatztopfes eingesetzt ist und daß der Einsatztopf in dem aus zwei Schraubhülsen zusammengesetzten Gehäuse gehalten ist.

Besitzt der Wasserhahn einen Schraubanschluß mit Innen- oder Außengewinde, dann wird die Verbindung mit der Vorrichtung dadurch gelöst,
daß die die Einlaßöffnung bildende Schraubhülse mit einem Außengewinde versehen ist, oder daß die die Einlaßöffnung bildende Schraubhülse mit einem Innengewinde versehen ist.

Es sind auch Perlatoren als Zusatzeinrichtungen für Wasserhähne
bekannt, wie das DE-GM 70 40 611 zeigt. Eine Weiterbildung kombiniert
die Vorrichtung mit dem Schaltventil dadurch mit einem derartigen
Perlator, daß in dem Gehäuse neben dem Schaltventil ein der Drosselung und Verteilung dienender Lochplatteneinsatz und der Vermischung
dienende Lochscheibensätze in Durchflußrichtung hintereinander angeordnet sind, daß der Stützbolzen des Ventilkörpers durch eine Bohrung
des Lochplatteneinsatzes geführt ist, daß der Kunststofftopf als Ende
des Stützbolzens in der in dem eingangsseitigen Lochscheibensatz
angeordneten Lagerbuchse geführt ist und daß die Betätigungsstange in
einer Buchse des ausgangsseitigen Lochscheibensatzes gelagert und
allseitig verschwenkbar ist.

Damit in der Öffnungsstellung des Schaltventils der Wasserauslauf
sicher über den Lochplatteneinsatz verläuft, sieht eine weitere
Ausgestaltung vor, daß der Kunststofftopf als Ende des Stützbolzens
des Ventilkörpers dem Lochplatteneinsatz zugekehrt als Verschlußkegel
ausgebildet ist, der in der Öffnungsstellung des Ventilkörpers die
Bohrung im Lochplatteneinsatz für den Stützbolzen abdichtet.

Die Rückstellung der Betätigungsstange in die lotrechte Ausgangsstellung wird nach einer Ausgestaltung dadurch gewährleistet, daß das
freie Ende der Betätigungsstange als Rückstellgewicht ausgebildet
ist.

- 6 -

Die allseitig verschwenkbare Lagerung der Betätigungsstange wird dadurch erreicht, daß die Buchse im ausgangsseitigen Lochscheibensatz ovalen Querschnitt aufweist, wobei der von der Buchse umschlossene Innenquerschnitt zur Auslauföffnung hin größer wird, und daß der Übergang der Betätigungsplatte in die Betätigungsstange entsprechend konkav abgerundet ist.

Die Abdichtung zwischen dem Lochplatteneinsatz und dem durchgeführten Stützbolzen des Ventilkörpers wird dadurch verbessert, daß der Lochplatteneinsatz im Bereich der Bohrung für den Stützbolzen des Ventilkörpers selbst als Dichtlippe ausgebildet ist.

Der Anschluß der Vorrichtung an einen Wasserhahn ohne Schraubanschluß wird nach einer Ausgestaltung dadurch ermöglicht, daß das Gehäuse mittels eines Klemmadapters mit einem gewindelosen Auslaufkopf eines Wasserhahnes verbindbar ist. Der Klemmadapter kann dabei von den Merkmalen Gebrauch machen, wie sie das DE-GM 76 16 214 zeigt.

Die Erfindung wird anhand eines im Schnitt dargestellten Ausführungsbeispiels einer Vorrichtung mit Schaltventil und Perlator näher erläutert.

Bei dem Ausführungsbeispiel ist die Vorrichtung als Zusatzeinrichtung ausgebildet, die als vorgefertigte Einheit mit dem Auslaufkopf des Wasserhahnes verbunden werde kann. Die gezeigte Einheit enthält neben dem Schaltventil auch noch einen Perlator.

Das Gehäuse 10 der Vorrichtung wird aus den beiden Schraubhülsen 11 und 14 zusammengesetzt. Die Schraubhülse 14 bildet die Einlaßöffnung und wird mit dem Außengewinde 15 in ein Innengewinde des Auslaufkopfes bzw. einer Überwurfmutter desselben eingeschraubt. Dabei dichtet der Dichtungsring 19 den Übergang ab. Ist die Schraubhülse 14 im Bereich der Einlaßöffnung mit einem Innengewinde versehen, dann kann die Vorrichtung direkt auf einen mit Außengewinde versehenen Auslaufkopf eines Wasserhahnes aufgeschraubt werden. Anstelle der Schraubhülse 14 kann auch ein Klemmadapter verwendet werden, so daß die Vorrichtung auf dem gewindelosen Auslaufkopf eines Wasserhahnes festgelegt werden kann.

Die Schraubhülse 14 läuft in ein Innengewinde 16 aus, das das Außengewinde 13 der Schraubhülse 11 aufnimmt. Bevor die Schraubhülse 11 mit der Schraubhülse 14 verschraubt wird, werden in die Schraubhülse 14 der Einsatztopf 18, der Lochplatteneinsatz 24 und der Lochscheibensatz 27 eingesetzt. Der Einsatztopf 18 stützt sich mit einem Außenbund an dem Innenbund 17 der Schraubhülse 14 ab.

In die Schraubhülse 11 ist der Lochscheibensatz 29 eingesetzt, der mittig eine Buchse 30 zur Lagerung der Betätigungsstange 31 aufweist. Der Dichtungsring 28 dichtet zwischen dem Lochplatteneinsatz 24 und dem Lochscheibensatz 27 ab. Im Bereich der Auslaßöffnung weist die Schraubhülse 11 einen Innenbund 36 auf, an dem sich der Lochscheibensatz 29 abstützt und der den Auslaßquerschnitt 12 freiläßt.

Der Einsatztopf 18 weist eine abgesetzte Innenaufnahme auf, in der der als Ventilsitz 23 dienende Dichtungsring festgelegt ist. Der Ventilkörper 20 des Schaltventils ist dem Ventilsitz 23 zugekehrt kegelstumpfförmig und geht einstückig in den Stützbolzen 21 über. Der Stützbolzen 21 ist durch eine mittige Bohrung des Lochplatteneinsatzes 18 geführt. Um diese Bohrung kann der Lochplatteneinsatz 18 selbst auch noch als Dichtlippe 25 ausgebildet sein. Das Ende 22 des Stützbolzens 21 ist als Kunststofftopf ausgebildet, der auf das Gewinde des Stützbolzens 21 aufgeschraubt ist. Der Kunststofftopf ist in der Lagerbuchse 26 axial verstellbar in dem Lochscheibensatz 27 geführt und steht auf der Betätigungsplatte 33 der Betätigungsstange 31 auf. Die Betätigungsplatte 33 hält die Betätigungsstange 31 unverlierbar in der Buchse 30, die in den Lochscheibensatz 29 eingesetzt ist. Die Buchse 30 hat einen ovalen Querschnitt, wobei der von ihr umschlossene Innenquerschnitt zu der Auslaßöffnung hin zunimmt.

Die Betätigungsstange 31 ist am freien Ende mit einem Rückstellgewicht 32 versehen, das die Betätigungsstange 31 in der gezeigten Ausgangsstellung hält. Dabei liegt die Unterseite der Betätigungsplatte 33 auf der Buchse 30 auf. Die Betätigungsplatte 33 geht über konkav gewölbte Rundungen in die Betätigungsstange 31 über, so daß diese allseitig auslenkbar in der Buchse 30 gelagert ist. Ist der Wasserhahn geöffnet, dann drückt das Wasser den Ventilkörper 20 gegen den Ventilsitz 23. Das Schaltventil der Vorrichtung ist geschlossen.

Wird die Betätigungsstange 31 aus der lotrechten Stellung verschwenkt, dann wird die Betätigungsplatte 33 verkantet. Dabei wird über den Kunststofftopf und den Stützbolzen 21 der Ventilkörper 20 vom Ventilsitz 23 abgehoben. Das Schaltventil der Vorrichtung ist geöffnet und das Wasser gelangt durch den Ventilsitz 23 auf die Dichtlippe 25 des Lochplatteneinsatzes 24. Das Wasser wird gezwungen, durch die Löcher 25 des Lochplatteneinsatzes 24 hindurch zu dem Lochscheibensatz 27 zu gelangen. Die der Dichtlippe 25 des Lochplatteneinsatzes 24 zugekehrte Fläche des Kunststofftopfes ist als Verschlußkegel 34 ausgebildet, wodurch im Bereich der Bohrung des Lochplatteneinsatzes 24 für den Stützbolzen 21 eine zusätzliche Abdichtung erreicht wird. Die Verstellbewegung des Stützbolzens 21 kann nur axial verlaufen, da das als Kunststofftopf ausgebildete Ende 22 des Stützbolzens 21 in der Lagerbuchse 26 des Lochscheibensatzes 27 geführt ist. Der Lochscheibeneinsatz 24 bringt in der Öffnungsstellung des Schaltventils eine Drosselung und Verteilung des Wassers, während die Lochscheibensätze 27 und 29 eine Vermischung des Wassers mit Luft bringen, wenn zusätzlich Lufteintrittsöffnungen vorgesehen sind. Auf diese Weise ist in dem Gehäuse 10 neben dem Schaltventil auch noch der Perlator untergebracht. Dabei werden der Lochplatteneinsatz 24 und die Lochscheibensätze 27 und 29 mit zur Lagerung und Führung des Ventilkörpers 20 und der Betätigungsstange 31 ausgenützt. Die Betätigungsstange 31 kann dabei mit der Betätigungsplatte 33 und dem Rückstellgewicht 32 als einstückiges Kunststoffteil ausgebildet sein und je nach Material auch selbst elastisch sein.

Das in dem Gehäuse 10 untergebrachte Schaltventil geht nur solange in die Öffnungsstellung, wie die Betätigungsstange 31 aus der lotrechten Ausgangsstellung ausgelenkt ist. Das Rückstellgewicht 32 sorgt für eine selbsttätige Rückstellung in die Ausgangsstellung.

Bei einem als Mischbatterie ausgebildeten Wasserhahn kann mit der Vorrichtung nach der Erfindung auf ein eigenes Abstellventil im Wasserhahn verzichtet werden. Es genügt, im Wasserhahn eine einstellbare Mischvorrichtung unterzubringen, da die Vorrichtung nach der Erfindung den Wasserauslauf steuert.

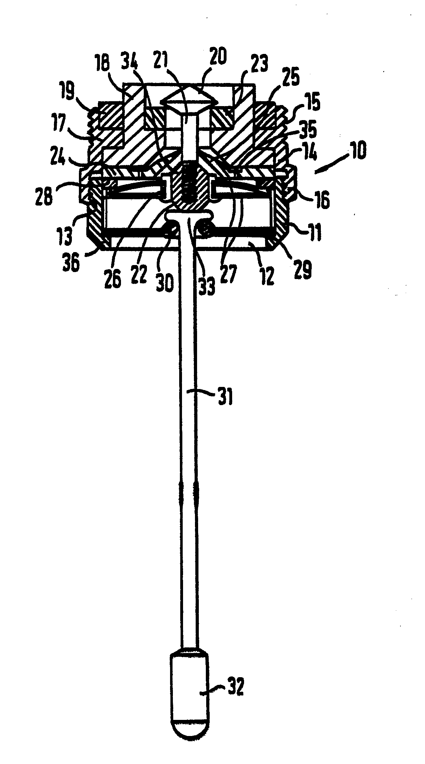

## Ansprüche

1. Vorrichtung zum Auslösen des Wasserauslaufes bei einem Wasserhahn mit Schalteinrichtung, die mittels eines aus der Auslauföffnung ragenden Betätigungsgliedes betätigbar ist, bei der ein hohlzylinderförmiges Gehäuse mit Einlaß- und Auslaßöffnung mit dem Auslaufkopf des Wasserhahnes verbindbar ist und die Schalteinrichtung einen Ventilkörper aufweist, der der Auslaßöffnung zugekehrt an einem Ventilsitz anliegt und mittels des Betätigungsgliedes von diesem abhebbar ist,

   dadurch gekennzeichnet,

   daß der Ventilkörper (20) von dem als Betätigungsstange (31) ausgebildeten Betätigungsglied getrennt ist,

   daß das dem Ventilkörper (20) zugekehrte Ende der Betätigungsstange (31) als Betätigungsplatte (33) ausgebildet ist, die die Betätigungsstange (31) unverlierbar in dem Gehäuse (10) festhält und auf der sich der Ventilkörper (20) abstützt und

   daß die Betätigungsstange (31) im Bereich der Betätigungsplatte (33) allseitig verschwenkbar im Gehäuse (10) gelagert ist und bei dieser Verschwenkung der Betätigungsstange (31) den Ventilkörper (20) anhebt.

2. Vorrichtung nach Anspruch 1,

   dadurch gekennzeichnet,

   daß sich der Ventilkörper (20) mittels eines Stützbolzens (21) auf der Betätigungsplatte (33) der Betätigungsstange (31) abstützt und daß der Stützbolzen (21) im Gehäuse (10) axial verstellbar geführt ist.

3.    Vorrichtung nach Anspruch 1 oder 2,
      dadurch gekennzeichnet,
      daß der Ventilkörper (20) dem Ventilsitz (23) zugekehrt kegelstumpfförmig ausgebildet ist und einstückig in den Stützbolzen
      (21) übergeht,
      daß der Stützbolzen (21) in ein Gewindeteil ausläuft, auf das ein
      Kunststofftopf angeschraubt ist, der als Ende (22) auf der Betätigungsplatte (33) der Betätigungsstange (31) abgestützt ist und
      daß der Kunststofftopf in einer Lagerbuchse (26) axial verstellbar
      geführt ist.

4.    Vorrichtung nach einem der Ansprüche 1 bis 3,
      dadurch gekennzeichnet,
      daß als Ventilsitz (23) ein Dichtungsring verwendet ist, der in
      eine abgesetzte Bohrung eines Einsatztopfes (18) eingesetzt ist
      und daß der Einsatztopf (18) in dem aus zwei Schraubhülsen (11,14)
      zusammengesetzten Gehäuse (10) gehalten ist.

5.    Vorrichtung nach einem der Ansprüche 1 bis 4,
      dadurch gekennzeichnet,
      daß in dem Gehäuse (10) neben dem Schaltventil ein der Drosselung
      und Verteilung dienender Lochplatteneinsatz (24) und der Vermischung dienende Lochscheibensätze (27,29) in Durchflußrichtung
      hintereinander angeordnet sind,
      daß der Stützbolzen (21) des Ventilkörpers (20) durch eine Bohrung
      des Lochplatteneinsatzes (24) geführt ist,
      daß der Kunststofftopf als Ende (22) des Stützbolzens (21) in der
      in dem eingangsseitigen Lochscheibensatz (27) angeordneten Lagerbuchse (26) geführt ist und
      daß die Betätigungsstange (31) in einer Buchse (30) des ausgangsseitigen Lochscheibensatzes (29) gelagert und allseitig verschwenkbar ist.

6. Vorrichtung nach Anspruch 5,
dadurch gekennzeichnet,
daß der Kunststofftopf als Ende (22) des Stützbolzens (21) des
Ventilkörpers (20) dem Lochplatteneinsatz (24) zugekehrt als
Verschlußkegel (34) ausgebildet ist, der in der Öffnungsstellung
des Ventilkörpers (20) die Bohrung im Lochplatteneinsatz (24) für
den Stützbolzen (21) abdichtet.

7. Vorrichtung nach einem der Ansprüche 1 bis 6,
dadurch gekennzeichnet,
daß das freie Ende der Betätigungsstange (31) als Rückstellgewicht
(32) ausgebildet ist.

8. Vorrichtung nach Anspruch 5,
dadurch gekennzeichnet,
daß die Buchse (30) im ausgangsseitigen Lochscheibensatz (29)
ovalen Querschnitt aufweist, wobei der von der Buchse (30) umschlossene Innenquerschnitt zur Auslauföffnung hin größer wird und
daß der Übergang der Betätigungsplatte (33) in die Betätigungsstange (31) entsprechend konkav abgerundet ist.

9. Vorrichtung nach einem der Ansprüche 5 bis 8,
dadurch gekenzeichnet,
daß der Lochplatteneinsatz (24) im Bereich der Bohrung für den
Stützbolzen (21) des Ventilkörpers (20) selbst als Dichtlippe (25)
ausgebildet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-B-1 199 564  (H. LINSSEN) <br> * Ansprüche * | 1 | F 16 K 31/58 <br> F 16 K 31/52 |
| A | DE-A-1 815 553  (THE UPJOHN CO.) <br> * Seite 7, Zeilen 3-17 * | 1 | |
| A | DE-A-2 522 714  (BRADLEY CORP.) <br> * Seite 9, Zeilen 5-11 * | 1 | |
| A | CH-A- 248 591  (R. NICK) | | |
| A | GB-A-2 041 498  (E. BACH) | | |
| A | US-A-4 133 345  (C. MITCHELL) | | RECHERCHIERTE SACHGEBIETE (Int Cl. ³) |
| A | US-A-3 887 165  (E.C. THOMPSON) | | F 16 K 31/00 <br> F 16 K 21/00 <br> F 16 K 19/00 <br> E 03 C  1/00 <br> A 01 K  7/00 <br> F 16 K 25/00 |

Der vorliegende Recherchenbericht wurde für alle Patentansprüche erstellt.

| Recherchenort <br> DEN HAAG | Abschlußdatum der Recherche <br> 16-09-1983 | Prüfer <br> DE SMET F.P. |
|---|---|---|